# EUROPEAN PATENT APPLICATION

(11) **EP 4 718 264 A1**
(43) Date of publication of application: **01.04.2026**
(21) Application number: 24203745.5
(22) Date of filing: 30.09.2024
(51) Int. Cl.: G06F 11/20

(54) **METHOD OF OPERATING A SYSTEM AND SYSTEM**

(71) Applicant: Hitachi Energy Ltd, 8050 Zürich (CH)
(72) Inventor: GERSPACH, Stephan, 79737 Herrischried (DE); EIDENBENZ, Raphael, 8049 Zürich (CH); INDLEKOFER, Andreas, 79771 Klettgau (DE); MARTINOD, Sebastien, 5443 Niederrohrdorf (CH); MEYER, Niklaus, 8308 Illnau (CH)
(74) Representative: Vossius & Partner Patentanwälte Rechtsanwälte mbB

(57) **Abstract**

The present disclosure relates to a method of operating a system (10), the system (10) including a first device (12) and a second device (14), the first device (12) and the second device (14) each having a service-oriented architecture, SOA. The method includes operating the first device (12), wherein the second device (14) is configured to act as a backup device to the first device (12); at least partially reconfiguring the second device (14), while the first device (12) is being operated; causing the second device (14) to take over operation of the first device (12) after at least partially reconfiguring the second device (14) has been completed.

## Description

Systems which include at least one first device and at least one second device which serves as a backup or standby device to the first device, also known as redundancy or redundant systems, are widely used in a variety of different fields and/or for a variety of different purposes. For instance, such systems are often used for controlling a battery storage.

The first device may be operated as a "hot" device and the second device, i.e., the "backup" or "redundant" or "standby" device, may take over operation for or from the first device, e.g., while the first device is being serviced or updated and/or when the first device is faulty. In other words, the first device and the second device may alternately be the "hot device" or the "backup" or "redundant" or "standby" device.

However, there are several disadvantages in the systems, methods, or mechanisms known from the prior art. For instance, redundant systems known from the prior art may, at least in some situations and/or conditions, have an unwanted or unintentional downtime and/or an undesirably long downtime, e.g., due to one or more faults to the "hot" device and the "backup" device.

Thus, there is a need to improve various aspects related to redundancy systems, for example, by addressing one or more of the drawbacks described above.

One or more drawbacks related to redundancy systems, in particular one or more of the drawbacks described above, may be improved by one or more aspects of the present disclosure.

According to a first aspect of the present disclosure, there is provided a method of operating a system. The system may include a first device and at least one second device. The first device and the second device may each have a service-oriented architecture, SOA. The method may include operating the first device. The second device may be configured to act as a backup device to the first device. The method may include at least partially reconfiguring the second device, while the first device is being operated. The method may include causing the second device to take over operation of the first device after at least partially reconfiguring the second device has been completed.

"Operating the first device" or "being operated", within the meaning of the present disclosure, means that the first device is in "hot" device mode, i.e., that the first device is in live operation in the respective application, e.g., as a controller of at least one device.

At least partially reconfiguring the second device, while the first device is being operated, and causing the second device to take over operation of the first device after at least partially reconfiguring the second device has been completed allows the standby device (in this case the second device) to be reconfigured, e.g., updated and/or upgraded, while in standby mode, i.e., before the second device takes over operation from the first device, i.e., before the second device becomes the "hot" device. This may enable the system to have no or substantially no or a reduced downtime during reconfiguration of the respective device, i.e., since the first device is "hot", i.e., is in live operation, while the second device is being at least partially reconfigured.

This may ensure that there is always or substantially always at least one device running, i.e., at least one device is "hot", and that no downtime is required to reconfigure the devices, which may reduce costs of operation of the system.

By contrast, the known redundant systems, or at least some of the known redundant systems, do not allow a device in standby mode to be reconfigured. This may force the user to reconfigure the "hot" device first, which causes undesirable downtime. The method described herein at least partially improves this issue.

Moreover, the method described herein may provide an automated means for reconfiguring the devices, in particular since the method may be automated, e.g., reconfiguring of the respective standby device, e.g., the second device, may be triggered automatically, e.g., by at least one criterion, e.g., by detecting that the respective device is in standby mode.

Once the second device has taken over operation from the first device, the first device may serve as a standby device to the second device. While the second device is being operated, the first device may be at least partially reconfigured. The method may include causing the first device to take over operation of the second device after at least partially reconfiguring the first device has been completed.

The system may include a plurality of the at least one second device and/or a plurality of the at least one first device.

One or more steps or all steps of the method described herein may be performed by the system, in particular by one or more components of the system. For instance, the system may include at least one processor configured to perform one or more steps of the method described herein.

Various embodiments may preferably implement the following features:
Preferably, causing the second device to take over operation of the first device after at least partially reconfiguring the second device has been completed includes forcing the second device to take over operation of the first device, even though a configuration of the first device does not match a configuration of the second device and/or the first device and the second device are not synchronized. This may enable to perform a forced switchover. For instance, when the first device or the second device has been reconfigured and/or when the configuration of the first device and the configuration of the second device are different (i.e., do not match), the systems and methods in the prior art generally determine that a switchover is not appropriate or not allowed, e.g., the standby device may be determined by the system to be "corrupt". Hence, in the prior art, in a situation in which a device A is "hot" and a device B is determined to be "corrupt", e.g., after reconfiguring only device B, the system, in particular device A, may block a switchover from device A to device B, i.e., if a condition is detected that would usually result in device A initiating an automated switchover (i.e., for the "hot" device to become the "standby" device and vice versa), the hot device refrains from executing a switchover. Moreover, the system may refuse switchover requests that come from one or more higher level entities, e.g., a higher-level control device or a human request. Thus, the method and the system described herein may overcome such constraints in the prior art, e.g., blocking switchovers in situations like a reconfiguration, by enabling an option of a forced switchover, e.g., a forced switchover request. In response to a forced switchover request, the "hot" device, e.g., the first device, may execute or try to execute a switchover to the standby device, e.g., the second device, regardless of the other device's state, e.g., "corrupted" or not.

Forcing the second device to take over operation of the first device, even though a configuration of the first device does not match a configuration of the second device and/or the first device and the second device are not synchronized, may be triggered by a forced switchover request, e.g., generated by the system, in particular the first device and/or the second device.

Various embodiments may preferably implement the following features:
Preferably, after at least partially reconfiguring the second device, while the first device is being operated, the first device, in particular a configuration of the first device, has a configuration ID which is different than a configuration ID of the second device, in particular of a configuration of the second device. In the prior art, when the configuration ID of a "hot" device and the configuration ID of the "standby" device do not match, a switchover is generally or usually prevented or blocked, as mentioned above. However, the method and the system described herein overcome such constraints in the prior art, as mentioned above.

Preferably, the method further includes:
after causing the second device to take over operation of the first device after at least partially reconfiguring the second device has been completed, at least partially reconfiguring the first device, while the second device is being operated. Then, the first device may be determined to be "corrupt", e.g., since the configuration of the first device and the configuration of the second device, e.g., the configuration IDs of the first device and the second device, may not match. However, as mentioned above, the method and system disclosed herein may enable a forced switchover from the second device to the first device, thereby overcoming the constraints of the prior art, as mentioned above.

Preferably, a configuration ID of a configuration of the first device and a configuration ID of a configuration of the second device are identical, after at least partially reconfiguring the first device has been completed. The configuration ID may be a number and/or a Universally Unique Identifier, UUID. The configuration ID may be generated, e.g., by an engineering tool. The configuration ID may be provided for both the hot and standby device configurations, i.e., the configuration of the first device and second device. Alternatively, or additionally, the configuration ID may be calculated and/or determined by the respective device itself, e.g., the first device and/or the second device, in particular during operation of the respective device, in particular based on the respective configuration.

Preferably, the first device and the second device exchange data with each other. The data may include whether the first device and/or the second device is being operated and/or is in an operating mode and/or whether the first device and/or the second device is in standby. Communication between the first device and the second device, e.g., the exchange of data mentioned above, may be initiated by the first device or the second device. The first device or the second device may contact or attempt to contact the other of the first device and the second device, in particular until the other of the first device and the second device responds.

Preferably, the method further includes:
comparing a configuration ID of a configuration of the first device and a configuration ID of a configuration of the second device; and
determining a mode of the first device and/or the second device based on comparing the configuration ID of the configuration of the first device and the configuration ID of the configuration of the second device. This may allow a mode of the first device and/or the second device, e.g., "hot" or "live" mode or "standby" mode, to be determined, and optionally shared with one or more components, e.g., the other of the first device and the second device.

Thus, the first device and the second device may negotiate which device of the first device and the second device is or shall be the "hot" or operating device and/or which device of the first device and the second device is or shall be the "standby" device.

Preferably, in case the first device and the second device are in a standby state or in an undecided or unavailable state, one or more criteria are applied to determine whether the first device or the second device is to be switched to being operated and/or to an operating mode. "Undecided" may be an initial state. For instance, when a device, e.g., the first device and/or the second device, starts up, it may not yet be able to determine whether it is or should be "hot" or "standby". It may be determined after the "negotiation" between the first device and the second device whether the first device is or shall be the "hot" device and the second device is or shall be the standby device. However, in case one of the devices is incapable of being reached and/or is not available, e.g., due to the above-mentioned start up of the respective device, e.g., in particular up to a certain timeout, the other device, i.e., the other of the first device or the second device, which is capable of being reached and/or is available is determined to be the "hot" device.

Preferably, the criteria include one or more of the following: whether the first device or the second device is determined, preferably predetermined, to be a primary device and/or the first device or the second device is determined, preferably predetermined, to be a secondary device, whether the first device or the second device has a higher identification number and/or a higher IP address. This may provide a "tie-breaker" criterion, e.g., when a number of higher-order criteria, e.g., such as availability, etc., are identical. This may prevent a "stalemate" situation which could lead to neither of the device being determined to be the "hot" device.

Preferably, in case the first device is being operated and/or is in an operating mode and the second device is in standby and a configuration ID of a configuration of the first device and a configuration ID of a configuration of the second device are identical, the first device is continued to be operated and/or remains in an operating mode and the second device remains in standby. Alternatively, or additionally, preferably, in case the second device is being operated and/or is in an operating mode and the first device is in standby and a configuration ID of a configuration of the first device and a configuration ID of a configuration of the second device are identical, second device is continued to be operated and/or remains in an operating mode and the first device remains in standby, in particular until there is a need to switchover, e.g., due to fault of the second device.

Preferably, before at least partially reconfiguring the second device, while the first device is being operated, a configuration ID of a configuration of the first device and a configuration ID of a configuration of the second device are identical.

Preferably, the first device and the second device are power plant controllers and/or controllers for controlling at least one battery energy storage system.

Preferably, continuous operation of the system is provided by operating eitherthe first device or the second device, in particular excluding a switchover time, which may be relatively short.

Operation of the system may be interrupted by a duration, in particular during a switchover from the first device or the second device to the other of the first device and the second device, of less than 2 seconds, in particular less than 1.5 seconds, in particular less than 1 second, in particular less than 0.5 seconds, in particular less than 0.25 seconds, in particular less than 0.1 seconds.

Preferably, the method further includes, after at least partially reconfiguring the second device has been completed, reinitializing the second device, while the first device is being operated.

Preferably, at least partially reconfiguring the second device includes one or more of the following: updating a firmware of the second device, updating a hardware of the second device, updating and/or replacing one or more services of the second device, updating and/or replacing a software of the second device, e.g., an application or program of a programmable logic controller, PLC, and changing and/or adjusting one or more parameters of one or more services of the second device.

An exemplary redundancy mode negotiation is described below.

Upon start or restart of a device, the device may try to connect with its redundant peer(s), and may exchange information to decide on its own redundancy mode, i.e., hot or standby. During this negotiation, the restarted device may exchange and compare its configuration ID with the configuration Id of the other device. It may also receive the other device's redundancy mode (hot or standby).

As a result of the negotiation, a device may decide about its own redundancy mode as follows
- If it was hot before, it may stay hot
- If the other device is hot and configuration IDs match, it may become standby
- If the other device is hot and configuration IDs do not match, it may become standby_corrupted
- If both devices are not hot (=standby or undecided/unavailable), one device may become hot and the other standby,
   o according to a predetermined and/or a-priori preference, e.g., by an "is primary" flag, or higher ID, higher or lower IP address, etc.

After each negotiation, both devices may know in which state or mode, e.g., "hot" mode or "standby" mode, the other or opposite device is.

According to a second aspect, the present disclosure also relates to a system which may include a first device and at least one second device. The first device and the second device may each have a service-oriented architecture, SOA. The system may be configured to operate the first device. The second device may be configured to act as a backup device to the first device. The system may be configured to at least partially reconfigure the second device, while the first device is being operated. The system may be configured to cause the second device to take over operation of the first device after at least partially reconfiguring the second device has been completed.

The features, embodiments, and advantages, as described herein, e.g., above, with respect to the method according to the first aspect of the present disclosure, apply to the system accordingly.

The system may include at least one processor configured to perform one or more steps of the method described herein. The system may include at least one communication device configured to allow the first device and the second device to communicate, e.g., exchange data, with each other.

The method(s) described herein are not limited to a particular sequence. The steps of the method(s) described herein may be performed in any sequence which is technically feasible. The embodiments described herein are not meant to limit the scope of the invention.

The following list of aspects provides alternative and/or further features of the invention:
1. A method of operating a system, the system including a first device and a second device, preferably wherein the first device and the second device each have a service-oriented architecture, SOA, wherein the method includes:
   operating, preferably by the system, the first device, wherein the second device is configured to act as a backup device to the first device;
   optionally, at least partially reconfiguring, preferably by the system, the second device, while the first device is being operated;
   causing, preferably by the system, the second device to take over operation of the first device:
      after the second device has been at least partially reconfigured;
         and/or
      after at least partially reconfiguring the second device has been completed;
         and/or
      when a configuration of the first device is different from a configuration of the second device.
2. The method of aspect 1, wherein causing the second device to take over operation of the first device after at least partially reconfiguring the second device has been completed includes forcing the second device to take over operation of the first device, even though a configuration of the first device does not match a configuration of the second device and/or the first device and the second device are not synchronized.
3. The method of aspect 1 or 2, wherein, after at least partially reconfiguring the second device, while the first device is being operated, a configuration of the first device has a configuration ID which is different than a configuration ID of a configuration of the second device.
4. The method of any of the preceding aspects, further including:
   after causing the second device to take over operation of the first device after at least partially reconfiguring the second device has been completed, at least partially reconfiguring the first device, while the second device is being operated.
5. The method of aspect 3 or 4, wherein a configuration ID of a configuration of the first device and a configuration ID of a configuration of the second device are identical, after at least partially reconfiguring the first device has been completed.
6. The method of any of the preceding aspects, wherein the first device and the second device exchange data with each other, wherein the data includes whether the first device and/or the second device is being operated and/or is in an operating mode and/or whether the first device and/or the second device is in standby.
7. The method of any of the preceding aspects, further including:
   comparing a configuration ID of a configuration of the first device and a configuration ID of a configuration of the second device; and
   optionally, determining a mode of the first device and/or the second device based on comparing the configuration ID of the configuration of the first device and the configuration ID of the configuration of the second device.
8. The method of any of the preceding aspects, wherein, in case the first device and the second device are in standby or undecided or unavailable, one or more criteria are applied to determine whether the first device or the second device is to be switched to being operated and/or to an operating mode.
9. The method of aspect 8, wherein the criteria include one or more of the following: whether the first device or the second device is determined, preferably predetermined, to be a primary device and/or the first device or the second device is determined, preferably predetermined, to be a secondary device, whether the first device or the second device has a higher identification number and/or a higher IP address.
10. The method of any of the preceding aspects, wherein:
   in case the first device is being operated and/or is in an operating mode and the second device is in standby and a configuration ID of a configuration of the first device and a configuration ID of a configuration of the second device are identical, the first device is continued to be operated and/or remains in an operating mode and the second device remains in standby;
      and/or
   in case the second device is being operated and/or is in an operating mode and the first device is in standby and a configuration ID of a configuration of the first device and a configuration ID of a configuration of the second device are identical, second device is continued to be operated and/or remains in an operating mode and the first device remains in standby.
11. The method of any of the preceding aspects, wherein, before at least partially reconfiguring the second device, while the first device is being operated, a configuration ID of a configuration of the first device and a configuration ID of a configuration of the second device are identical.
12. The method of any of the preceding aspects, wherein the first device and the second device are power plant controllers and/or controllers for controlling at least one battery energy storage system.
13. The method of any of the preceding aspects, wherein continuous operation of the system is provided by operating either the first device or the second device.
14. The method of any of the preceding aspects, further including, after at least partially reconfiguring the second device has been completed, reinitializing the second device, while the first device is being operated.
15. The method of any of the preceding aspects, wherein at least partially reconfiguring the second device includes one or more of the following: updating a firmware of the second device, updating a hardware of the second device, updating and/or replacing one or more services of the second device, updating and/or replacing a software of the second device, and changing and/or adjusting one or more parameters of one or more services of the second device.
16. A system which includes a first device and a second device, preferably wherein the first device and the second device each have a service-oriented architecture, SOA, wherein the system is configured to:
   operate the first device, wherein the second device is configured to act as a backup device to the first device;
   optionally, at least partially reconfigure the second device, while the first device is being operated;
   cause the second device to take over operation of the first device:
      after the second device has been at least partially reconfigured;
         and/or
      after at least partially reconfiguring the second device has been completed;
         and/or
      when a configuration of the first device is different from a configuration of the second device.

Embodiments of the present invention are further elucidated below with reference to the figures. The figures are schematic drawings and as such may not show all details of the systems and their components. Particularly, the drawings are not necessarily to scale and the shown dimensions are only exemplary and may vary. The drawings illustrate exemplary embodiments to provide a thorough understanding of the present invention. The drawings are not intended to limit the scope of the invention, which is defined by the appended claims and is to include the equivalents thereof.
- Fig. 1: schematically illustrates a system according to an embodiment of the present disclosure;
- Fig 2: shows a further illustration of the system of Fig. 1.

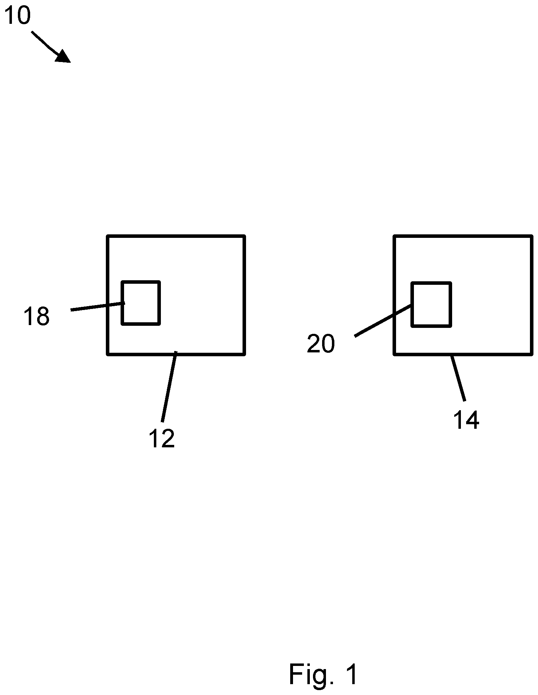

Fig. 1 shows, in a schematic view, a system 10 which may include a first device 12 and a second device 14. The first device 12 and the second device 14 may each have a service-oriented architecture, SOA. The system 10 may be configured to operate the first device 12. The second device 14 may be configured to act as a backup or standby device to or for the first device 12. The system 10 may be configured to at least partially reconfigure the second device 14, while the first device 12 is being operated, i.e., is in a hot mode or in live operation mode. The system 10 may be configured to cause the second device 14 to take over operation of the first device 12 after at least partially reconfiguring the second device 14 has been completed.

The first device 12 and/or the second device 14 may include at least one processor 18, 20. The processor(s) 18, 20 may be configured to perform one or more steps of the method and/or one or more functions of the system 10 described herein. The first device 12 and/or the second device 14 may include at least one programmable logic controller, PLC, which may include a PLC application. The first device 12 and/or the second device 14 may include one or more services.

Causing the second device 14 to take over operation of the first device 12 after at least partially reconfiguring the second device 14 has been completed may include forcing the second device 14 to take over operation of the first device 12, even though a configuration of the first device 12 does not match a configuration of the second device 14 and/or the first device 12 and the second device 14 are not synchronized.

After at least partially reconfiguring the second device 14, while the first device 12 is being operated, i.e., is in a hot mode or in live operation mode, a configuration of the first device 12 may have a configuration ID which is different than a configuration ID of a configuration of the second device 14.

After causing the second device 14 to take over operation of the first device 12 after at least partially reconfiguring the second device 14 has been completed, the system 10 may be configured to at least partially reconfigure the first device 12, while the second device 14 is being operated.

A configuration ID of a configuration of the first device 12 and a configuration ID of a configuration of the second device 14 may be identical, after at least partially reconfiguring the first device 12 has been completed.

The first device 12 and the second device 14 may be configured to exchange data with each other. The data may include a mode of the first device 12 and/or the second device 14, e.g., whether the first device 12 and/or the second device 14 is being operated (i.e., is in operation mode or hot mode) and/or is in an operating mode and/or whether the first device 12 and/or the second device 14 is in standby mode.

The system 10 may be configured to compare a configuration ID of a configuration of the first device 12 and a configuration ID of a configuration of the second device 14. The system may be configured to determine a mode of the first device 12 and/or the second device 14 based on comparing the configuration ID of the configuration of the first device 12 and the configuration ID of the configuration of the second device 14.

The system 10 may be configured to apply one or more criteria are to determine whether the first device 12 or the second device 14 is to be switched to being operated and/or to an operating mode, in case the first device 12 and the second device 14 are in standby mode or in an undecided or unavailable state.

The criteria may include one or more of the following: whether the first device 12 or the second device 14 is determined, preferably predetermined, to be a primary device and/or the first device 12 or the second device 14 is determined, preferably predetermined, to be a secondary device, whether the first device 12 or the second device 14 has a higher identification number and/or a higher IP address.

The system may be configured to continue operation of the first device 12 and/or to maintain the first device 12 in an operating mode and maintain the second device 14 in a standby mode, in case the first device 12 is being operated and/or is in an operating mode and the second device 14 is in standby and a configuration ID of a configuration of the first device 12 and a configuration ID of a configuration of the second device 14 are identical.

Alternatively, or additionally, the system 10 may be configured to continue operation of the second device 14 and/or to maintain the second device 14 in an operating mode and maintain the first device 12 in a standby mode, in case the second device 14 is being operated and/or is in an operating mode and the first device 12 is in standby and a configuration ID of a configuration of the first device 12 and a configuration ID of a configuration of the second device 14 are identical.

A configuration ID of a configuration of the first device 12 and a configuration ID of a configuration of the second device 14 may be identical, before at least partially reconfiguring the second device 14, while the first device 12 is being operated, i.e., is in hot mode or operation mode.

The system 10 may be configured to provide continuous operation of the system 10 by operating either the first device 12 or the second device 14.

The system 19 may be configured to re-initialize the second device 14, while the first device 12 is being operated, after at least partially reconfiguring the second device 14 has been completed.

At least partially reconfiguring the second device 14 may include one or more of the following: updating a firmware of the second device 14, updating a hardware of the second device 14, updating and/or replacing one or more services of the second device 14, updating and/or replacing a software of the second device 14, and changing and/or adjusting one or more parameters of one or more services of the second device 14.

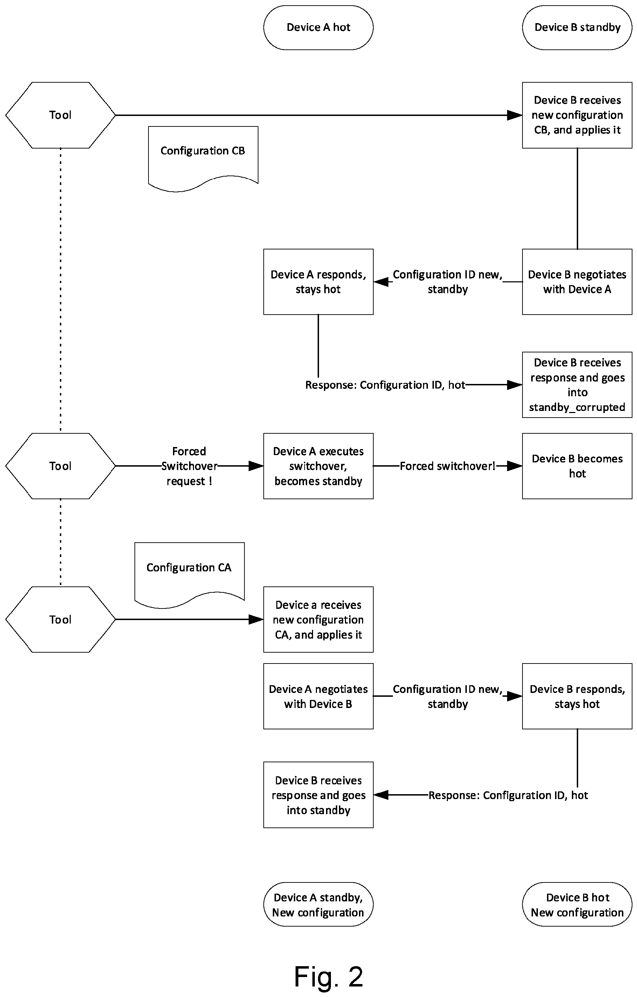

Fig. 2 shows an exemplary reconfiguration procedure of a system, e.g., the system 10 of Fig. 1.

Initially, the redundant system 10 may in a healthy state where one device, e.g., the first device 12, may operate as the hot device in the broader system context, and the other device, e.g., the second device 14, may be in standby mode and may be ready to take over in case of faults on the hot device 12.

An engineering tool may connect devices A or B and may apply a new configuration. The engineering tool may be equipped with the new pair configurations C_A and C_B for device A and B, respectively. C_A and C_B may have the same configuration ID.

The reconfiguration may proceed as follows (wherein "Device A" in Fig. 2 may correspond to the first device 12 and "Device B" in Fig. 2 may correspond to the second device 14):
1. IET may connect to Device B and may load new configuration C_B
2. Device B may apply C_B,
   1. which may require that it restarts the full device or in the case of service-oriented systems, restarts a set of services with the new configuration
3. After applying the configuration, B may connect and may negotiate with A.
   1. Since the configuration IDs may be different and A may already be hot, B may go into a standby_corrupted state
4. Later, the engineering tool may connect to Device A (and B) and may issue a forced switchover request
5. Device B may become hot (with new configuration!)
6. Device A may become standby_corrupted (since the other is hot and configuration ID's don't match)
7. The engineering tool may now load the new configuration C_A to Device A
8. Device A may apply C_A
9. After applying the configuration, A may connect and may negotiate with B.
   1. Now the configuration IDs may match
   2. Since B is already hot, B may stay hot and A may go into standby mode

## Claims

1. A method of operating a system (10), the system (10) including a first device (12) and a second device (14), the first device (12) and the second device (14) each having a service-oriented architecture, SOA, wherein the method includes:
operating the first device (12), wherein the second device (14) is configured to act as a backup device to the first device (12);
at least partially reconfiguring the second device (14), while the first device (12) is being operated;
causing the second device (14) to take over operation of the first device (12) after at least partially reconfiguring the second device (14) has been completed.

2. The method of claim 1, wherein causing the second device (14) to take over operation of the first device (12) after at least partially reconfiguring the second device (14) has been completed includes forcing the second device (14) to take over operation of the first device (12), even though a configuration of the first device (12) does not match a configuration of the second device (14) and/or the first device (12) and the second device (14) are not synchronized.

3. The method of claim 1 or 2, wherein, after at least partially reconfiguring the second device (14), while the first device (12) is being operated, a configuration of the first device (12) has a configuration ID which is different than a configuration ID of a configuration of the second device (14).

4. The method of any of the preceding claims, further including:
after causing the second device (14) to take over operation of the first device (12) after at least partially reconfiguring the second device (14) has been completed, at least partially reconfiguring the first device (12), while the second device (14) is being operated.

5. The method of claim 3 or 4, wherein a configuration ID of a configuration of the first device (12) and a configuration ID of a configuration of the second device (14) are identical, after at least partially reconfiguring the first device (12) has been completed.

6. The method of any of the preceding claims, wherein the first device (12) and the second device (14) exchange data with each other, wherein the data includes whether the first device (12) and/or the second device (14) is being operated and/or is in an operating mode and/or whether the first device (12) and/or the second device (14) is in standby.

7. The method of any of the preceding claims, further including:
comparing a configuration ID of a configuration of the first device (12) and a configuration ID of a configuration of the second device (14); and
determining a mode of the first device (12) and/or the second device (14) based on comparing the configuration ID of the configuration of the first device (12) and the configuration ID of the configuration of the second device (14).

8. The method of any of the preceding claims, wherein, in case the first device (12) and the second device (14) are in standby or undecided, one or more criteria are applied to determine whether the first device (12) or the second device (14) is to be switched to being operated and/or to an operating mode.

9. The method of claim 8, wherein the criteria include one or more of the following: whether the first device (12) or the second device (14) is determined, particularly predetermined, to be a primary device and/or the first device (12) or the second device (14) is determined, particularly predetermined, to be a secondary device, whether the first device (12) or the second device (14) has a higher identification number and/or a higher IP address.

10. The method of any of the preceding claims, wherein:
in case the first device (12) is being operated and/or is in an operating mode and the second device (14) is in standby and a configuration ID of a configuration of the first device (12) and a configuration ID of a configuration of the second device (14) are identical, the first device (12) is continued to be operated and/or remains in an operating mode and the second device (14) remains in standby;
and/or
in case the second device (14) is being operated and/or is in an operating mode and the first device (12) is in standby and a configuration ID of a configuration of the first device (12) and a configuration ID of a configuration of the second device (14) are identical, second device (14) is continued to be operated and/or remains in an operating mode and the first device (12) remains in a standby mode.

11. The method of any of the preceding claims, wherein, before at least partially reconfiguring the second device (14), while the first device (12) is being operated, a configuration ID of a configuration of the first device (12) and a configuration ID of a configuration of the second device (14) are identical.

12. The method of any of the preceding claims, wherein continuous operation of the system is provided by operating either the first device (12) or the second device (14).

13. The method of any of the preceding claims, further including, after at least partially reconfiguring the second device (14) has been completed, reinitializing the second device (14), while the first device (12) is being operated.

14. The method of any of the preceding claims, wherein at least partially reconfiguring the second device (14) includes one or more of the following: updating a firmware of the second device (14), updating a hardware of the second device (14), updating and/or replacing one or more services of the second device (14), updating and/or replacing a software of the second device (14), and changing and/or adjusting one or more parameters of one or more services of the second device (14).

15. A system (10) which includes a first device (12) and a second device (14), the first device (12) and the second device (14) each having a service-oriented architecture, SOA, wherein the system (10) is configured to:
operate the first device (12), wherein the second device (14) is configured to act as a backup device to the first device (12);
at least partially reconfigure the second device (14), while the first device (12) is being operated;
cause the second device (14) to take over operation of the first device (12) after at least partially reconfiguring the second device (14) has been completed.
